(19) Europäisches Patentamt
European Patent Office
Office européen des brevets

(11) **EP 4 692 165 A1**

(12) **EUROPEAN PATENT APPLICATION**
published in accordance with Art. 153(4) EPC


(43) Date of publication:
**11.02.2026 Bulletin 2026/07**

(21) Application number: **24784801.3**

(22) Date of filing: **27.03.2024**

(51) International Patent Classification (IPC):
***C08G 64/14*** *(2006.01)*

(52) Cooperative Patent Classification (CPC):
**C08G 64/14**

(86) International application number:
**PCT/JP2024/012198**

(87) International publication number:
**WO 2024/210012 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 JP 2023062226**



(71) Applicant: **MITSUBISHI GAS CHEMICAL COMPANY, INC.**
**Chiyoda-ku**
**Tokyo 100-8324 (JP)**

(72) Inventor: **ISHIKAWA Shun**
**Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**


(54) **POLYCARBONATE RESIN AND MOLDED ARTICLE**


(57) The present invention can provide a polycarbonate resin comprising a constituent unit (A) derived from a monomer represented by formula (1) and a constituent unit (B) derived from a monomer represented by formula (2), the terminal structure of the polycarbonate resin having a structure derived from a terminator represented by formula (Z-1), wherein the molar ratio (A:B) between the constituent unit (A) and the constituent unit (B) is 35:65 to 75:25, and the number of moles a of the constituent unit (A), the number of moles b of the constituent unit (B) and the number of moles z of the terminator represented by formula (Z-1) satisfy the relationship of expression (I):

$$45 \leq 2*(a+b)/z < 80 \qquad (I)$$

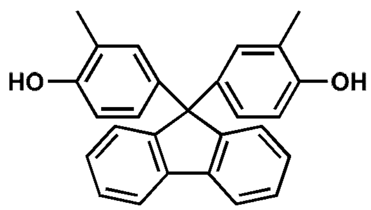

(1)

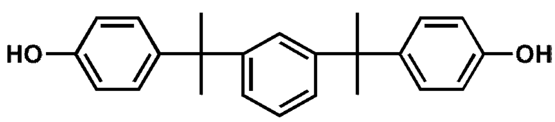

(2)


EP 4 692 165 A1

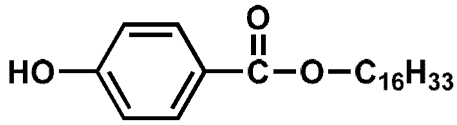

(Z-1)

## Description

### TECHNICAL FIELD

The present invention relates to a polycarbonate resin and a molded article obtained therefrom. More specifically, the present invention relates to a polycarbonate resin, which contains a structural unit having a specific bisphenol skeleton and has a specific terminal structure, and which has excellent optical characteristics.

### BACKGROUND ART

As a material of optical lenses to be used in optical systems of various cameras such as cameras, film integrated type cameras and video cameras, an optical glass or an optical resin is used. Optical glasses are excellent in heat resistance, transparency, size stability, chemical resistance, etc., but have problems of high material costs, bad molding processability and low productivity.
Meanwhile, advantageously, optical lenses made of optical resins can be massproduced by injection molding. As high refractive index materials for camera lenses, polycarbonate, polyester carbonate, polyester resins, etc. are used.
When using an optical resin as an optical lens, in addition to optical characteristics such as the refractive index and Abbe number, heat resistance, transparency, low water absorbability, chemical resistance, low birefringence, moist heat resistance, etc. are required. In particular, recently, optical lenses having a high refractive index have been demanded, and various resins have been developed in response to this demand (Patent Documents 1 to 5).
However, since there is an increasing demand for various molding and processing methods and plastic optical lenses, polycarbonate resins having better molding processability, wherein the number of crazes generated is small even when left under high-temperature and high-humidity conditions for a long period of time after molding, have been desired. The term "craze" refers to a fine crack that is generated in a plastic surface due to the action of stress. The internal structure of the craze is composed of fibrils (bundles of molecular chains) oriented in the direction of stress and fine voids (nanovoids). The craze part looks whitish (whitening) since the refractive index thereof is different from those of other parts. When the stress continues to act on the craze, the fibrils are broken and the craze grows into a crack.

### PRIOR ART DOCUMENTS

### PATENT DOCUMENTS

Patent Document 1: Japanese Laid-Open Patent Publication No. 2018-2893
Patent Document 2: Japanese Laid-Open Patent Publication No. 2018-2894
Patent Document 3: Japanese Laid-Open Patent Publication No. 2018-2895
Patent Document 4: Japanese Laid-Open Patent Publication No. 2018-59074
Patent Document 5: WO2017/078073

### SUMMARY OF THE INVENTION

### PROBLEMS TO BE SOLVED BY THE INVENTION

The present invention addresses the problem of providing a polycarbonate resin which has excellent optical characteristics and suitable flowability for molding and processing, wherein the number of crazes generated is small even when left under high-temperature and high-humidity conditions for a long period of time after molding, and a molded article obtained therefrom.

### MEANS FOR SOLVING THE PROBLEMS

The present inventors diligently made researches in order to solve the problems and found that a polycarbonate resin which has excellent optical characteristics and also has excellent flowability, wherein the number of crazes generated is small even when left under high-temperature and high-humidity conditions for a long period of time after molding, can be obtained by blending a diol compound having a specific structure and an end terminator in specific amounts, and thus the present invention was achieved.
Specifically, the present invention includes aspects described below.

<1> A polycarbonate resin comprising a structural unit (A) derived from a monomer represented by formula (1) and a structural unit (B) derived from a monomer represented by formula (2), the terminal structure of the polycarbonate resin comprising a structure derived from an end terminator represented by formula (Z-1), wherein:

the molar ratio (A:B) between the structural unit (A) and the structural unit (B) is 35:65 to 75:25; and
the number of moles a of the structural unit (A), the number of moles b of the structural unit (B), and the number of moles z of the end terminator represented by formula (Z-1) satisfy the relationship of expression (I):

$$45 \leq 2*(a+b)/z < 80 \qquad (I)$$

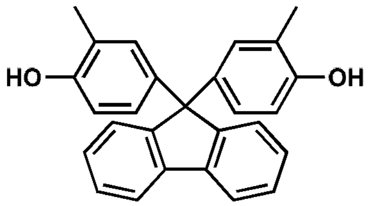

(1)

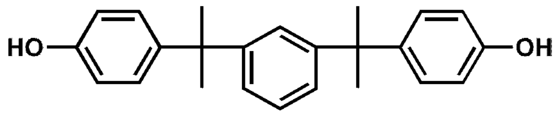

(2)

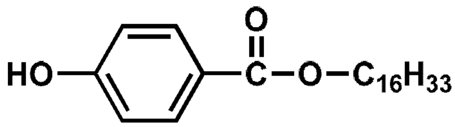

(Z-1)

<2> The polycarbonate resin according to item <1>, which has a glass transition temperature of 130°C to 170°C.
<3> The polycarbonate resin according to item <1> or <2>, which has a Q value (280°C, a load of 160 kg) of $3*10^{-2}$ ml/s to $50*10^{-2}$ ml/s.
<4> A molded article obtained from the polycarbonate resin according to any one of items <1> to <3>.
<5> The molded article according to item <4>, which has 20 or less crazes having a size of 200 to 500 μm in an appearance test that is conducted after the molded article is left under high-temperature and high-humidity conditions (temperature: 85°C, relative humidity: 85%) for 100 hours.

ADVANTAGEOUS EFFECT OF THE INVENTION

According to the present invention, it is possible to provide a polycarbonate resin which has excellent optical characteristics and also has excellent flowability, wherein the number of crazes generated is small even when left under high-temperature and high-humidity conditions for a long period of time after molding, and a molded article obtained therefrom. In the conventional technologies, the generation of crazes and bubbles is a problem. According to the present invention, in particular, the generation of crazes can be suppressed.

EMBODIMENTS FOR CARRYING OUT THE INVENTION

Hereinafter, the present invention will be described in detail by way of synthesis examples, working examples, etc., but the present invention is not limited thereto and can be arbitrarily changed and then practiced within a range not departing from the gist of the present invention.

<Polycarbonate Resin>

The polycarbonate resin of the present invention is a polycarbonate resin containing a structural unit (A) derived from a monomer represented by formula (1) and a structural unit (B) derived from a monomer represented by formula (2), the terminal structure of the polycarbonate resin containing a structure derived from an end terminator represented by formula (Z-1), wherein: the molar ratio (A:B) between the structural unit (A) and the structural unit (B) is 35:65 to 75:25; and

the number of moles a of the structural unit (A), the number of moles b of the structural unit (B), and the number of moles z of the end terminator represented by formula (Z-1) satisfy the relationship of expression (I):

$$45 \leq 2*(a+b)/z < 80 \qquad (I)$$

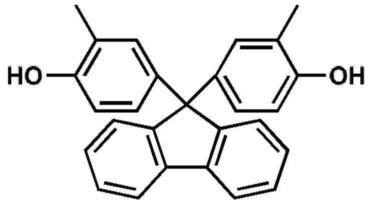

(1)

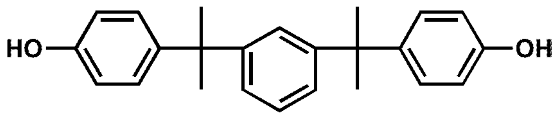

(2)

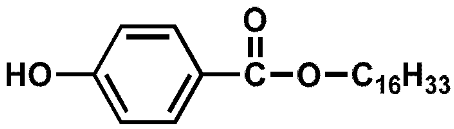

(Z-1)

In the present invention, the molar ratio (A:B) between the structural unit (A) and the structural unit (B) is 35:65 to 75:25, but is preferably 40:60 to 70:30, more preferably 55:45 to 65:35, and even more preferably 60:40 since outer appearance and hardness (number of scratches with a pencil hardness of H) of a cast film are favorable.

In the present invention, the number of moles a of the structural unit (A), the number of moles b of the structural unit (B), and the number of moles z of the end terminator represented by formula (Z-1) satisfy the relationship of expression (I) above, but preferably satisfy the relationship of expression (I-1):

$$45 \leq 2*(a+b)/z < 60 \qquad (I-1)$$

More preferably, the value of 2*(a+b)/z is 46 to 55, even more preferably, the value of 2*(a+b)/z is 47 to 52, and most preferably, the value of 2*(a+b)/z is 48 to 50.

By satisfying the relationship of expression (I) above, a polycarbonate resin, wherein the number of crazes generated is small even when left under high-temperature and high-humidity conditions for a long period of time after molding, is obtained and stable molding can be realized, and it can contribute to mass production. It is considered that the reason why the number of crazes generated is small even when left under high-temperature and high-humidity conditions for a long period of time after molding is that viscoelastic properties can be improved by increasing the value of 2*(a+b)/z.

In the present invention, the monomer represented by formula (1) is referred to as BCFL (biscresol fluorene), 9,9-bis(4-hydroxy-3-methylphenyl)fluorene or the like, and the monomer represented by formula (2) is referred to as BPM (1,3-bis[2-(4-hydroxyphenyl)-2-propyl]benzene) or the like and is also called bisphenol M. Further, the end terminator represented by formula (Z-1) is referred to as CEPB (hexadecyl-4-hydroxybenzoate), 4-hydroxybenzoic acid hexadecyl ester or the like. As each of these substances, either a commercially available product or a synthesized product may be used.

In a preferred embodiment of the present invention, the ratio of the sum of the structural units (A) and (B) in all the structural units in the polycarbonate resin is preferably 80 to 100 mol%, more preferably 90 to 100 mol%, and particularly preferably 100 mol%.

That is, the polycarbonate resin to be used in the present invention may contain, in addition to the structural units (A) and (B), a structural unit derived from an aliphatic dihydroxy compound and a structural unit derived from an aromatic dihydroxy compound, which are generally used as a structural unit of a polycarbonate resin or polyester carbonate resin, within a range in which the effects of the present invention are not reduced.

Specifically, examples of the aliphatic dihydroxy compound include various substances, and particularly include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Examples of the aromatic dihydroxy compound include various substances, and particularly include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and bisphenoxyethanol fluorene.

In one embodiment of the present invention, the polycarbonate resin further containing a structural unit derived from at least one monomer selected from the group of monomers below is also preferred.

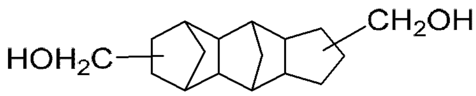
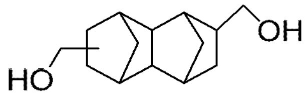
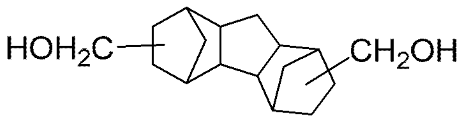
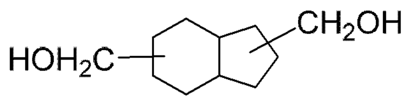
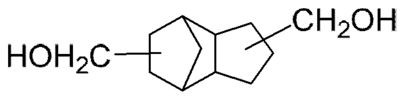
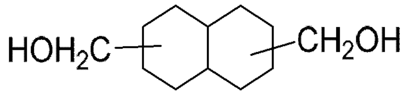
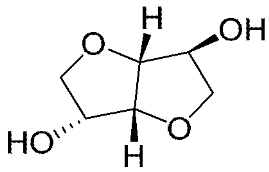
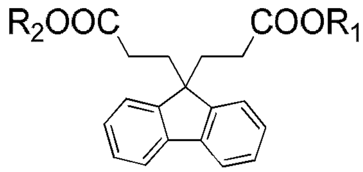
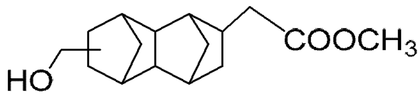
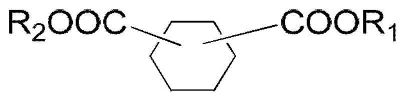
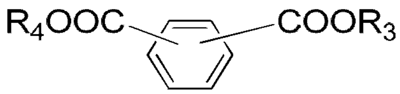
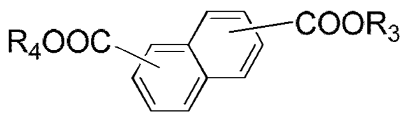

(In the formulae above, $R_1$ and $R_2$ each independently represent a hydrogen atom, a methyl group or an ethyl group, and $R_3$ and $R_4$ each independently represent a hydrogen atom, a methyl group, an ethyl group or an alkylene glycol having 2 to 5 carbon atoms.)

<Method for Producing Polycarbonate Resin>

In the phosgene method, usually, diol is reacted with phosgene in the presence of an acid binding agent and a solvent. As the acid binding agent, for example, pyridine, a hydroxide of an alkali metal such as sodium hydroxide and potassium hydroxide or the like is used. As the solvent, for example, methylene chloride, chloroform or the like is used. Moreover, for promoting a polycondensation reaction, a phase transfer catalyst such as a tertiary amine including triethylamine, a quaternary ammonium salt including triethylbenzylammonium chloride (TEBAC) or the like is preferably used, and TEBAC is more preferably used since the terminal OH concentration (terminal hydroxyl group concentration) can be reduced thereby. TEBAC is preferably added to the reaction system before phosgene is reacted. Furthermore, for adjusting the polymerization degree, CEPB (hexadecyl-4-hydroxybenzoate) is preferably added as a molecular weight control agent. Further, if desired, an antioxidant such as sodium sulfite and hydrosulfite and a branching agent such as phloroglucin and isatin bisphenol may be added in a small amount. The reaction temperature is usually 0 to 150°C, and preferably 5 to 40°C. The reaction time varies depending on the reaction temperature, but is usually 0.5 min to 10 hours, and preferably 1 min to 2 hours. Further, during the reaction, pH of the reaction system is desirably maintained at 10 or higher.

Moreover, to the polycarbonate resin of the present invention, an antioxidant, a processing stabilizer, a mold

release agent, an ultraviolet absorber, a flowability improving agent, a crystal nucleating agent, a toughening agent, a dye, an antistatic agent, an antimicrobial agent or the like may be added according to need. In the present invention, an antioxidant and a mold release agent are preferably contained. In this specification, a polycarbonate composition obtained by adding additives like those described above to the polycarbonate resin of the present invention is also included in the "polycarbonate resin".

Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl) isocyanurate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane, and 3,9-bis(2,6-di-tert-butyl-4-methylphenoxy)-2,4,8,10-tetraoxa-3,9-diphosphaspiro[5.5]undecane. Among them, pentaerythritol-tetrakis[3-(3,5-di-tert-butyl-4-hydroxyphenyl)propionate] and 3,9-bis(2,6-di-tert-butyl-4-methylphenoxy)-2,4,8,10-tetraoxa-3,9-diphosphaspiro[5.5]undecane are preferred. The content of the antioxidant in the polycarbonate resin is preferably 0.001 to 0.3 parts by mass, and more preferably 0.01 to 0.2 parts by mass relative to 100 parts by mass of the polycarbonate resin.

As the catalyst deactivator, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used.

From the viewpoint of effects of the catalyst deactivator, stability against the resin, etc., dodecylbenzenesulfonic acid tetrabutylphosphonium salt is particularly preferred. The content of the catalyst deactivator in the polycarbonate resin is preferably 0.0001 to 0.3 parts by mass, more preferably 0.001 to 0.1 parts by mass, and particularly preferably 0.001 to 0.01 parts by mass relative to 100 parts by mass of the polycarbonate resin.

Kneading of the catalyst deactivator may be carried out immediately after the polymerization reaction is completed, or may be carried out after the resin after the polymerization is pelletized. Further, in addition to the catalyst deactivator, other additives may also be added in a similar manner.

Examples of the processing stabilizer include a phosphorus-based processing heat stabilizer and a sulfur-based processing heat stabilizer. Examples of the phosphorus-based processing heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylenebis(4,6-di-tert-butylphenyl) octylphosphite, bis(nonylphenyl) pentaerythritol diphosphite, bis(2,4-dicumylphenyl) pentaerythritol diphosphite, bis(2,4-di-tert-butylphenyl) pentaerythritol diphosphite, distearylpentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-t-butylphenyl)-4,4'-biphenylene diphosphonate, tetrakis(2,4-di-t-butylphenyl)-4,3'-biphenylene diphosphonate, tetrakis(2,4-di-t-butylphenyl)-3,3'-biphenylene diphosphonate, bis(2,4-di-tert-butylphenyl)-4-phenyl-phenylphosphonate, and bis(2,4-di-tert-butylphenyl)-3-phenyl-phenylphosphonate. The content of the phosphorus-based processing heat stabilizer in the polycarbonate resin is preferably 0.001 to 0.3 parts by mass, and more preferably 0.001 to 0.2 parts by mass relative to 100 parts by mass of the polycarbonate resin.

Examples of the sulfur-based processing heat stabilizer include pentaerythritoltetrakis(3-lauryl thiopropionate), pentaerythritol-tetrakis(3-myristyl thiopropionate), pentaerythritol-tetrakis(3-stearyl thiopropionate), dilauryl-3,3'-thiodipropionate, dimyristyl-3,3'-thiodipropionate, and distearyl-3,3'-thiodipropionate. The content of the sulfur-based processing heat stabilizer in the polycarbonate resin is preferably 0.001 to 0.3 parts by mass, and more preferably 0.001 to 0.2 parts by mass relative to 100 parts by mass of the polycarbonate resin.

Regarding the mold release agent, it is preferred that 90% by mass or more of it is made of an ester of an alcohol and a fatty acid. Specific examples of the ester of an alcohol and a fatty acid include an ester of a monohydric alcohol and a fatty acid and a partial ester or whole ester of a polyhydric alcohol and a fatty acid. As the above-described ester of a

monohydric alcohol and a fatty acid, an ester of a monohydric alcohol having 1 to 20 carbon atoms and a saturated fatty acid having 10 to 30 carbon atoms is preferred. Further, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferred.

Specific examples of the ester of a monohydric alcohol and a saturated fatty acid include stearyl stearate, palmityl palmitate, butyl stearate, methyl laurate, and isopropyl palmitate. Specific examples of the partial ester or whole ester of a polyhydric alcohol and a saturated fatty acid include whole esters or partial esters of monoglyceride stearate (glycerin monostearate), monoglyceride stearate, diglyceride stearate, triglyceride stearate, monosorbitate stearate, monoglyceride behenate, monoglyceride caprate, monoglyceride laurate, pentaerythritol monostearate, pentaerythritol tetrastearate, pentaerythritol tetrapelargonate, propylene glycol monostearate, biphenyl biphenate, sorbitan monostearate, 2-ethylhexyl stearate and dipentaerythritols such as dipentaerythritol hexastearate. Among them, monoglyceride stearate and monoglyceride laurate are particularly preferred. The content of these mold release agents is preferably 0.005 to 2.0 parts by mass, more preferably 0.01 to 0.6 parts by mass, and even more preferably 0.02 to 0.5 parts by mass relative to 100 parts by mass of the polycarbonate resin.

The ultraviolet absorber is preferably at least one ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber and a cyanoacrylate-based ultraviolet absorber. That is, ultraviolet absorbers mentioned below may be used solely, or two or more of them may be used in combination.

Examples of the benzotriazole-based ultraviolet absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole.

Examples of the benzophenone-based ultraviolet absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophonone, and 2-hydroxy-4-methoxy-2'-carboxybenzophenone.

Examples of the triazine-based ultraviolet absorber include 2-(4,6-diphenyl-1,3,5-triazin-2-yl)-5-[(hexyl)oxy]-phenol, 2-(4,6-bis(2,4-dimethylphenyl)-1,3,5-triazin-2-yl)-5-[(octyl)oxy]-phenol, and 2,4,6-tris(2-hydroxy-4-hexyloxy-3-methylphenyl)-1,3,5-triazine.

Examples of the cyclic iminoester-based ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The content of the ultraviolet absorber is preferably 0.01 to 3.0 parts by mass, more preferably 0.02 to 1.0 parts by mass, and even more preferably 0.05 to 0.8 parts by mass relative to 100 parts by mass of the polycarbonate resin. When the content is within these ranges, sufficient weatherability can be imparted to the polycarbonate resin according to intended use.

<Molded Article of Polycarbonate Resin and Method for Producing Same>

A molded article can be produced using the polycarbonate resin of the present invention. It is molded according to any method, for example, the injection molding method, compression molding method, extrusion molding method, solution casting method or the like. The polycarbonate resin of the present invention is excellent in moldability (good flowability), heat resistance (high glass transition temperature) and hardness (number of scratches with a pencil hardness of H), and therefore can be advantageously used particularly for optical lenses and optical films which require injection molding.

In an appearance test of the molded article of the present invention like that described in the Examples described later, in which the appearance test is conducted after the molded article is left under high-temperature and high-humidity

conditions (temperature: 85°C, relative humidity: 85%) for 100 hours, the number of crazes having a size of 200 to 500 μm is preferably 20 or less, more preferably 10 or less, and particularly preferably 5 or less.

(Optical Lens)

An optical lens produced by using the polycarbonate resin of the present invention has a high refractive index and excellent hardness, and therefore can be used in the field in which expensive glass lenses having a high refractive index have been conventionally used including telescopes, binoculars and television projectors and is very useful. The optical lens is preferably used in the form of an aspherical lens according to need. In the case of the aspherical lens, since the spherical aberration can be adjusted to be substantially zero by one lens, it is not necessary to remove the spherical aberration by combining a plurality of spherical lenses, and reduction in weight and reduction in the production cost can be carried out. Accordingly, the aspherical lens is particularly useful as a camera lens among optical lenses.
Further, the optical lens is molded by any method such as the injection molding method, the compression molding method, and the injection compression molding method. According to the present invention, an aspherical lens having a high refractive index and low birefringence, which is technically difficult to obtain by processing a glass lens, can be more conveniently obtained.
In order to avoid mixing of a foreign material in the optical lens as much as possible, the molding environment must be a low-dust environment, and it is preferably Class 6 or lower, and more preferably Class 5 or lower.

(Optical Film)

An optical film produced by using the polycarbonate resin of the present invention has excellent transparency and heat resistance, and therefore is suitably used for a film for liquid crystal substrates, an optical memory card, etc.
In order to avoid mixing of a foreign material in the optical film as much as possible, the molding environment must be a low-dust environment, and it is preferably Class 6 or lower, and more preferably Class 5 or lower.

<Physical Properties of Polycarbonate Resin>

In the present invention, the Q value (280°C, a load of 160 kg) of the polycarbonate resin is preferably $3*10^{-2}$ ml/s to $50*10^{-2}$ ml/s, and more preferably $5*10^{-2}$ ml/s to $45*10^{-2}$ ml/s since good flowability at the time of molding and good handleability of resin are realized, and even more preferably $5*10^{-2}$ ml/s to $40*10^{-2}$ ml/s since particularly suitable flowability for molding and processing is realized.
In the present invention, the glass transition temperature (Tg) of the polycarbonate resin is preferably 130 to 170°C, and more preferably 132 to 161°C on the assumption of use of molded articles in various environments.

EXAMPLES

Hereinafter, the present invention will be specifically described by way of examples, but the present invention is not limited thereto. Note that measurement values in the Examples were measured using the below-described methods and apparatuses.

1) Calculation of 2*(a+b)/z

The calculation was made using the amount of substance (mol) of BCFL (biscresol fluorene) as a, the amount of substance (mol) of BPM (1,3-bis[2-(4-hydroxyphenyl)-2-propyl]benzene) as b, and the amount of substance (mol) of the end terminator as z.

2) Glass Transition Temperature (Tg, unit: °C)

Tg of the polycarbonate resin was measured using the following apparatus and conditions.

Differential scanning calorimeter: DSC, "DS-50" manufactured by Shimadzu Corporation
Measurement method: JIS K7211

Measurement conditions:

Amount of sample: 5 mg, atmosphere: under nitrogen gas atmosphere, temperature raising conditions: 10°C/min

3) Q Value

The polycarbonate resin was dried at 120°C for 4 hours, and then the measurement was performed in accordance with JIS-K7210, using the below-described apparatus and conditions.

Measurement apparatus: Flow tester CFT-500D manufactured by Shimadzu Corporation
Amount of sample: 2 g
Temperature: 280°C

Load: 160 kgf

4) Appearance Test of Molded Article

- A molded piece was molded by injection molding. Molding conditions are as follows.

  Molding machine: small injection molding machine (C. Mobile manufactured by EPSON TcFORM CORPORATION)
  Molding conditions: injection temperature of 300°C, mold temperature of 80°C Shape of molded piece: 30 mm×40 mm, 1 mm-thick flat plate

- Using the above-described molded piece, a high-temperature and high-humidity test (accelerated life test) was conducted under the following conditions.

  Apparatus: constant temperature and humidity bath (SH-222 manufactured by ESPEC CORP.)
  Test conditions: 85°C, relative humidity of 85%, 100 hours

- Regarding the sample after the above-described test, the number of crazes having a size of 200 to 500 μm was counted using a magnifying glass. Counting was carried out 3 times with respect to each of 3 test pieces and the average value was calculated. A sample with the value of 0 to 10 was judged as "0", a sample with the value of 11 to 20 was judged as "1", a sample with the value of 21 to 30 was judged as "2", a sample with the value of 31 to 40 was judged as "3", a sample with the value of 41 to 50 was judged as "4", and a sample with the value of 51 or more was judged as "5".

(Example 1)

To 500 ml of 9% (w/w) aqueous solution of sodium hydroxide, 62.1 g of biscresol fluorene (BCFL: manufactured by Honshu Chemical Industry Co., Ltd.), 37.9 g of bisphenol M (BPM: manufactured by Honshu Chemical Industry Co., Ltd.), and 0.5 g of hydrosulfite were added to be dissolved therein. To this solution, 300 ml of dichloromethane and 0.1 g of triethylbenzylammonium chloride (TEBAC: manufactured by FUJIFILM Wako Pure Chemical Corporation) were added, and while stirring, the solution temperature was set to 20°C and 37.9 g of phosgene was injected thereinto over 30 minutes.

After the injection of phosgene was completed, 4.41 g of hexadecyl-4-hydroxybenzoate (CEPB) dissolved in 200 ml of dichloromethane was added thereto and the mixture was vigorously stirred for 7 minutes to be emulsified. After that, 0.5 ml of triethylamine as a polymerization catalyst was added thereto to perform polymerization for about 30 minutes.

The polymerization solution was separated into an aqueous layer and an organic layer, and the organic layer was neutralized with phosphoric acid and washed with pure water repeatedly until the pH of the washing solution became 7.0. The organic solvent was distilled away from the purified polycarbonate resin to obtain polycarbonate resin powder. This polycarbonate resin powder was dried at 120°C for 24 hours to completely distill the solvent away. Physical properties of the obtained polycarbonate resin are shown in Table 1.

(Examples 2 to 5, Comparative Examples 1 to 10)

The polymerization was performed in a manner similar to that in Example 1, except that, regarding BCFL, BPM and the end terminator, raw materials are as shown in Table 2. The results are shown in Table 1.

Table 1

| | BCFL (mol%) | BPM (mol%) | End terminator | 2*(a+b)/z | Tg (°C) | Q value (*$10^{-2}$ml/s) | Appearance test of molded article |
|---|---|---|---|---|---|---|---|
| Example 1 | 60 | 40 | CEPB | 45 | 161 | 9.9 | 1 |
| Example 2 | 50 | 50 | CEPB | 45 | 143 | 24.7 | 1 |
| Example 3 | 50 | 50 | CEPB | 50 | 147 | 17.0 | 0 |
| Example 4 | 40 | 60 | CEPB | 50 | 132 | 40.0 | 0 |
| Example 5 | 50 | 50 | CEPB | 70 | 149 | 5.0 | 1 |
| Comparative Example 1 | 60 | 40 | PTBP | 30 | 168 | 24.7 | 5 |
| Comparative Example 2 | 60 | 40 | CEPB | 40 | 158 | 14.6 | 4 |
| Comparative Example 3 | 50 | 50 | CEPB | 40 | 142 | 36.4 | 3 |
| Comparative Example 4 | 50 | 50 | CEPB | 80 | 153 | 3.3 | 0 |
| Comparative Example 5 | 50 | 50 | PTBP | 50 | 154 | 11.0 | 2 |
| Comparative Example 6 | 40 | 60 | CEPB | 40 | 132 | 79.1 | 2 |
| Comparative Example 7 | 30 | 70 | CEPB | 45 | 120 | 17.3 | 3 |
| Comparative Example 8 | 80 | 20 | CEPB | 45 | 189 | 0.7 | 5 |
| Comparative Example 9 | 60 | 40 | CEPB | 30 | 150 | 41.7 | 5 |
| Comparative Example 10 | 70 | 30 | CEPB | 30 | 164 | 14.9 | 5 |

Table 2

| | BCFL (g) | BPM (g) | BCFL (mol) | BPM (mol) | BCFL (mol %) | BPM (mol %) | End terminator | End terminator (g) | End terminator (mol) | 2*(a+ b)/z |
|---|---|---|---|---|---|---|---|---|---|---|
| Example 1 | 62.1 | 37.9 | 0.16 | 0.11 | 60 | 40 | CEPB | 4.41 | 0.0122 | 45 |
| Example 2 | 52.2 | 47.8 | 0.14 | 0.14 | 50 | 50 | CEPB | 4.45 | 0.0123 | 45 |
| Example 3 | 52.2 | 47.8 | 0.14 | 0.14 | 50 | 50 | CEPB | 4.00 | 0.0110 | 50 |
| Example 4 | 42.1 | 57.9 | 0.11 | 0.17 | 40 | 60 | CEPB | 4.04 | 0.0111 | 50 |
| Example 5 | 52.2 | 47.8 | 0.14 | 0.14 | 50 | 50 | CEPB | 2.86 | 0.0079 | 70 |
| Comparative Example 1 | 62.1 | 37.9 | 0.16 | 0.11 | 60 | 40 | PTBP | 2.74 | 0.0182 | 30 |
| Comparative Example 2 | 62.1 | 37.9 | 0.16 | 0.11 | 60 | 40 | CEPB | 4.96 | 0.0137 | 40 |
| Comparative Example 3 | 52.2 | 47.8 | 0.14 | 0.14 | 50 | 50 | CEPB | 5.00 | 0.0138 | 40 |
| Comparative Example 4 | 52.2 | 47.8 | 0.14 | 0.14 | 50 | 50 | CEPB | 2.50 | 0.0069 | 80 |
| Comparative Example 5 | 52.2 | 47.8 | 0.14 | 0.14 | 50 | 50 | PTBP | 1.66 | 0.0110 | 50 |
| Comparative Example 6 | 42.1 | 57.9 | 0.11 | 0.17 | 40 | 60 | CEPB | 5.05 | 0.0139 | 40 |
| Comparative Example 7 | 31.9 | 68.1 | 0.08 | 0.20 | 30 | 70 | CEPB | 4.53 | 0.0125 | 45 |

(continued)

| | BCFL (g) | BPM (g) | BCFL (mol) | BPM (mol) | BCFL (mol %) | BPM (mol %) | End terminator | End terminator (g) | End terminator (mol) | 2*(a+ b)/z |
|---|---|---|---|---|---|---|---|---|---|---|
| Comparative Example 8 | 81.4 | 18.6 | 0.22 | 0.05 | 80 | 20 | CEPB | 4.33 | 0.0120 | 45 |
| Comparative Example 9 | 62.1 | 37.9 | 0.16 | 0.11 | 60 | 40 | CEPB | 6.61 | 0.0180 | 30 |
| Comparative Example 10 | 71.8 | 28.2 | 0.19 | 0.08 | 70 | 30 | CEPB | 6.56 | 0.0180 | 30 |

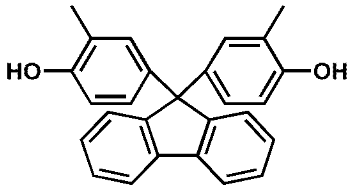

BCFL

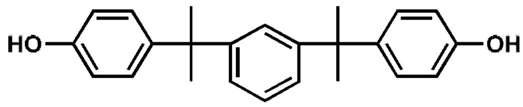

BPM

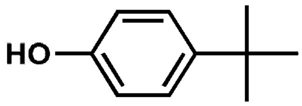

PTBP

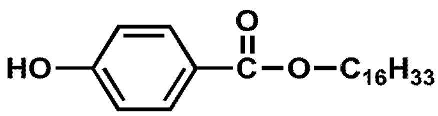

CEPB

## Claims

1. A polycarbonate resin comprising a structural unit (A) derived from a monomer represented by formula (1) and a structural unit (B) derived from a monomer represented by formula (2), a terminal structure of the polycarbonate resin comprising a structure derived from an end terminator represented by formula (Z-1), wherein:

   a molar ratio (A:B) between the structural unit (A) and the structural unit (B) is 35:65 to 75:25; and
   a number of moles a of the structural unit (A), a number of moles b of the structural unit (B), and a number of moles z of the end terminator represented by formula (Z-1) satisfy the relationship of expression (I):

$$45 \leq 2*(a+b)/z < 80 \qquad (I)$$

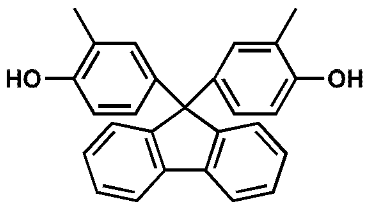

(1)

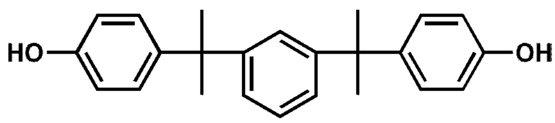

(2)

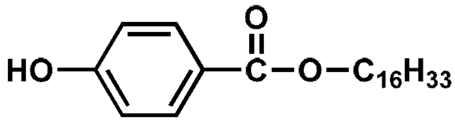

(Z-1)

**2.** The polycarbonate resin according to claim 1, which has a glass transition temperature of 130°C to 170°C.

**3.** The polycarbonate resin according to claim 1 or 2, which has a Q value (280°C, a load of 160 kg) of $3*10^{-2}$ ml/s to $50*10^{-2}$ ml/s.

**4.** A molded article obtained from the polycarbonate resin according to any one of claims 1 to 3.

**5.** The molded article according to claim 4, which has 20 or less crazes having a size of 200 to 500 μm in an appearance test that is conducted after the molded article is left under high-temperature and high-humidity conditions (temperature: 85°C, relative humidity: 85%) for 100 hours.

**INTERNATIONAL SEARCH REPORT**

International application No. **PCT/JP2024/012198**

**A. CLASSIFICATION OF SUBJECT MATTER**

***C08G 64/14***(2006.01)i
FI: C08G64/14

According to International Patent Classification (IPC) or to both national classification and IPC

**B. FIELDS SEARCHED**

Minimum documentation searched (classification system followed by classification symbols)

C08G64/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2005-082713 A (TEIJIN CHEMICALS LTD.) 31 March 2005 (2005-03-31) claim 1, paragraph [0033], example 3 | 1-5 |
| A | JP 2005-041988 A (TEIJIN CHEMICALS LTD.) 17 February 2005 (2005-02-17) claim 1, paragraph [0034], example 3 | 1-5 |
| A | JP 2005-023124 A (TEIJIN CHEMICALS LTD.) 27 January 2005 (2005-01-27) claim 1, paragraph [0042], example 3 | 1-5 |
| P, A | WO 2023/120559 A1 (MITSUBISHI GAS CHEMICAL COMPANY, INC.) 29 June 2023 (2023-06-29) claims, examples | 1-5 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/012198**

| Patent document cited in search report | Publication date (day/month/year) | Patent family member(s) | Publication date (day/month/year) |
|---|---|---|---|
| JP 2005-082713 A | 31 March 2005 | (Family: none) | |
| JP 2005-041988 A | 17 February 2005 | (Family: none) | |
| JP 2005-023124 A | 27 January 2005 | (Family: none) | |
| WO 2023/120559 A1 | 29 June 2023 | TW 202340318 A<br>claims, examples | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- JP 2018059074 A
- WO 2017078073 A